# EUROPEAN PATENT APPLICATION

(11) **EP 4 559 979 A1**
(43) Date of publication of application: **28.05.2025**
(21) Application number: 22951708.1
(22) Date of filing: 07.09.2022
(51) Int. Cl.: C08L 95/00, C08L 53/02, C08L 75/04, C08L 21/00, C08K 3/04, C08K 5/01, C08K 5/544, C08K 5/5435, C08K 3/06, C08K 5/47

(54) **GRAPHENE MODIFIED ASPHALT AND PREPARATION METHOD THEREFOR**

(30) Priority: 18.07.2022 CN 202210838852
(71) Applicant: Central Fortune Creation Technology Group Co., Ltd, Foshan, Guangdong 528312 (CN); Central Fortune Creation (Zhejiang) Transportation Technology Co., Ltd, Hangzhou, Zhejiang 310018 (CN)
(72) Inventor: YU, Jiangmiao, Hangzhou Bay Wisdom Valley Building, 233 Yonghui Road, Ningwei Street, Xiaoshan District, Hangzhou, Zhejiang 310018 (CN); ZOU, Yuanhao, Hangzhou Bay Wisdom Valley Building, 233 Yonghui Road, Ningwei Street, Xiaoshan District, Hangzhou, Zhejiang 310018 (CN)
(74) Representative: Ehrler Patent
(86) International application number: PCT/CN2022/117407
(87) International publication number: WO 2024/016442

(57) **Abstract**

The present invention relates to the technical field of asphalt preparation, and in particular relates to graphene modified asphalt and a preparation method therefor. The graphene modified asphalt provided in the present invention is prepared from the following raw materials in parts by weight: 100-140 parts of asphalt, and 1-20 parts of a modifier, wherein the modifier is modified graphene, and is prepared from the following raw materials: graphene, a styrene-butadiene-styrene block copolymer, polyurethane, rubber, a compatilizer, a coupling agent, sulfur and an accelerant. The graphene modified asphalt provided in the present invention has relatively strong aging resistance, fatigue resistance and hydrophobicity. FIG. 6

## Description

This patent application claims the priority to Chinese Patent Application No. 202210838852.2 filed with the China National Intellectual Property Administration on July 18, 2022 and entitled "GRAPHENE MODIFIED ASPHALT AND PREPARATION METHOD THEREOF", the disclosure of which is incorporated herein by reference in its entirety.

### TECHNICAL FIELD

The present disclosure relates to the technical field of asphalt preparation, and in particular to a graphene modified asphalt and a preparation method thereof.

### BACKGROUND

At present, asphalt pavements have become mainstream types of high-grade pavements in China, which is mainly attributable to the advantages of short construction period, comfortable driving, reducing night glare and easy maintenance of asphalt pavement. In addition, porous asphalt pavements have a relatively large porosity, generally about 20%, which could quickly discharge the rainwater from the pavement, effectively improving the safety and comfort of vehicle driving in rainy and snowy weather. Moreover, due to the deeper surface configuration, as well as noise reduction and skid resistance, the porous asphalt pavements are focus of researches in road industries.

The porous asphalt pavements include a relatively small proportion of fine aggregates, and thus have a large porosity, resulting in a higher demand for asphalt viscosity. At present, high-viscosity modified asphalt is generally used as a cementitious material for the porous asphalt pavements. However, the porous asphalt pavements obtained by using the high-viscosity modified asphalt as the cementitious material have insufficient durability and short service life. One reason is that the large porosity of the porous asphalt pavements makes the cementitious material, asphalt, easy to contact the air to undergo aging and hardening, resulting in fatigue failure and reduced service life of the pavements. The second is that the dust carried by vehicle tires and impurities in the air are prone to block the pores of the pavements, resulting in the loss of road function serviceability.

### SUMMARY

In view of this, the present disclosure provides a graphene modified asphalt and a preparation method thereof. The graphene modified asphalt according to the present disclosure has strong aging resistance, fatigue resistance, and hydrophobicity.

To achieve the above object, the present disclosure provides a graphene modified asphalt, including the following raw materials in parts by weight: 100-140 parts of an asphalt; and 1-20 parts of a modifier, where the modifier is modified graphene and is prepared from the following raw materials: graphene, a styrene-butadiene-styrene (SBS) block copolymer, polyurethane, rubber, a compatilizer, a coupling agent, sulfur and an accelerant.

In some embodiments, the modifier is prepared from the raw materials comprising, in parts by weight:
1-5 parts of the graphene;
5-20 parts of the SBS block copolymer;
5-20 parts of the polyurethane;
5-20 parts of the rubber;
0.5-3 parts of the compatilizer;
0.1-0.5 parts of the coupling agent;
0.1-0.25 parts of the sulfur; and
0.35-0.65 parts of the accelerant.

In some embodiments, the modifier may have a particle size of 0.075 mm to 2.36 mm.

In some embodiments, the modifier is prepared by a process comprising the following steps:
mixing the graphene, the SBS block copolymer, the polyurethane, the rubber, the compatilizer, and the coupling agent to obtain a resulting mixture, and subjecting the resulting mixture to a first compounding and a first rubber discharging in sequence to obtain a first compound rubber; and
mixing the first compound rubber with the sulfur and the accelerant to obtain an obtained mixture, and subjecting the obtained mixture to a second compounding and a second rubber discharging in sequence to obtain the modifier;
where the first compounding is conducted at a temperature of 60 °C to 90 °C for 5 min to 25 min; and
the second compounding is conducted at a temperature of 50 °C to 80 °C for 3 min to 10 min.

In some embodiments, the asphalt is SBS modified asphalt.

The present disclosure further provides a method for preparing the graphene modified asphalt as described above, including the following steps:
preheating and dispersing the modifier to obtain a preheated and dispersed modifier;
heating the asphalt, and mixing a resulting molten asphalt with the preheated and dispersed modifier to obtain a premix; and
subjecting the premix to shearing, and then thermal insulation development to obtain the graphene modified asphalt.

The preheating and dispersing is conducted at a temperature of 95 °C to 125 °C for 1 h to 2 h.

In some embodiments, the mixing is conducted at a temperature of 160 °C to 200 °C.

In some embodiments, the shearing is conducted at a speed of 5,000-10,000 r/min, and the shearing is conducted at a temperature of 170 °C to 200 °C for 40 min to 80 min.

In some embodiments, the thermal insulation development is conducted at a temperature of 165 °C to 190 °C for 24 h to 48 h.

The present disclosure provides a graphene modified asphalt, including the following raw materials: 100-140 parts of an asphalt; and 1-20 parts of a modifier, where the modifier is modified graphene and is prepared from raw materials including: graphene, a SBS block copolymer, polyurethane, rubber, a compatilizer, a coupling agent, sulfur and an accelerant. The modifier according to the present disclosure is modified graphene. The incorporation of the coupling agent and the compatilizer in the graphene is beneficial to the uniform miscibility of the graphene in asphalt macromolecules, preventing agglomeration, giving full play to the characteristics of high strength and toughness of the graphene, and substantially improving the physical properties of asphalt (penetration, softening point, ductility, viscosity at 60°C, etc.). In addition, pure graphene is an inorganic material, which is prone to the decrease of low temperature performance of asphalt after asphalt incorporation. In the present disclosure, the SBS block copolymer, the polyurethane, the rubber and the graphene could be blended to effectively solve the problem that the pure graphene is incorporated with the asphalt, leading to the decrease of the low temperature performance of the asphalt, and improving the fatigue resistance of the asphalt. The coupling agent and the compatilizer in the modified graphene could be cross-linked with the asphalt. After the graphene is mixed into the molecular structure of the asphalt, the path of free oxygen entering in the asphalt and the evaporation of light components to the outside world is prolonged, thus delaying the aging and deterioration of the asphalt under thermal oxidation. Moreover, the modified graphene is cross-linked with the macromolecular chain of the asphalt, improving the overall anti-cracking ability and fatigue performance of the asphalt. In addition, the graphene is a superhydrophobic material. When the modified graphene is mixed with the asphalt, the graphene could uniformly exist in the graphene modified asphalt to improve the hydrophobicity of the asphalt. Strong hydrophobicity could reduce the adhesion of void interface to impurities, achieve rapid and efficient cleaning, restore the drainage characteristics of porous asphalt concrete, and improve the drainage efficiency of the pavements.

The present disclosure further provides a method for preparing the graphene modified asphalt, including the following steps: preheating and dispersing the modifier to obtain a preheated and dispersed modifier; heating the asphalt, and mixing a resulting molten asphalt with the preheated and dispersed modifier to obtain a premix; and subjecting the premix to shearing, thermal insulation development to obtain the graphene modified asphalt. The method according to the present disclosure has simple steps and strong operability, and is easy to realize industrial production.

### BRIEF DESCRIPTION OF THE DRAWINGS

FIG. 1 illustrates penetrations of the graphene modified asphalt and the SBS asphalt before and after aging;
FIG. 2 illustrates ductility of the graphene modified asphalt and the SBS asphalt before and after aging;
FIG. 3 illustrates stress-strain of the graphene modified asphalt and the SBS asphalt before and after aging;
FIG. 4 illustrates strain-fatigue life of the graphene modified asphalt and the SBS asphalt before and after aging;
FIG. 5 illustrates a contact angle of the SBS asphalt; and
FIG. 6 illustrates a contact angle of the graphene modified asphalt in Example 4.

### DETAILED DESCRIPTION OF THE EMBODIMENTS

The present disclosure provides a graphene modified asphalt, including the following raw materials in parts by weight:
100-140 parts of an asphalt; and
1-20 parts of a modifier;
where the modifier is modified graphene and is prepared from raw materials including: graphene, a SBS block copolymer, polyurethane, rubber, a compatilizer, a coupling agent, sulfur and an accelerant.

In the present disclosure, the graphene modified asphalt is prepared from 100-140 parts by weight, preferably 105-130 parts by weight, and more preferably 108-112 parts by weight of the asphalt. In some embodiments of the present disclosure, the asphalt is SBS modified asphalt. In some embodiments of the present disclosure, the asphalt is PG76-22 SBS modified asphalt. In some embodiments of the present disclosure, the asphalt has a penetration at 25 °C (0.1 mm) of 40 to 60, and preferably 50 to 55. In some embodiments of the present disclosure, the asphalt has a softening point of ≥60 °C, and preferably 75 °C to 80 °C. In some embodiments of the present disclosure, the asphalt has a ductility of ≥20 cm, and preferably 25 cm to 32 cm.

In the present disclosure, the graphene modified asphalt is prepared from 1-20 parts by weight, preferably 2-18 parts by weight, and more preferably 2-12 parts by weight of the modifier. In the present disclosure, the modifier is modified graphene. In some embodiments of the present disclosure, the modifier has a particle size of 0.075 mm to 2.36 mm, preferably 0.075 mm to 1.18 mm, and more preferably 0.15 mm to 0.6 mm. In the present disclosure, the modifier is prepared from raw materials including: graphene, an SBS block copolymer, polyurethane, rubber, a compatilizer, a coupling agent, sulfur and an accelerant.

In some embodiments of the present disclosure, the modifier is prepared from 1-5 parts by weight, and preferably 2-4 parts by weight of the graphene.

In some embodiments of the present disclosure, the modifier is prepared from 5-20 parts by weight, and preferably 10-15 parts by weight of the SBS block copolymer. In some embodiments of the present disclosure, the SBS block copolymer has a weight-average molecular weight of >200,000, preferably 210,000 to 500,000, and more preferably 250,000 to 450,000. In some embodiments of the present disclosure, the modifier is prepared from 5-20 parts by weight, and preferably 10-15 parts by weight of the polyurethane. In some embodiments of the present disclosure, the polyurethane has a weight-average molecular weight of >10,000, preferably 10,000 to 6,000,000, and more preferably 100,000 to 300,000. In some embodiments of the present disclosure, the modifier is prepared from 5-20 parts by weight, and preferably 10-15 parts by weight of the rubber. In some embodiments of the present disclosure, the rubber has a particle size of 20 meshes to 100 meshes, preferably 20 meshes to 60 meshes, and more preferably 30 meshes to 50 meshes. In the present disclosure, the role of the SBS block copolymer, the polyurethane, and the rubber is to make the modifier have excellent viscosity and elasticity, offsetting the problem of insufficient low-temperature performance of the asphalt caused by the graphene.

In some embodiments of the present disclosure, the modifier is prepared from 0.5-3 parts by weight, and preferably 1-2 parts by weight of the compatilizer. In some embodiments of the present disclosure, the compatilizer includes one or more selected from the group consisting of aromatic hydrocarbons, straight-chain alkanes, and cycloalkanes. In some embodiments of the present disclosure, the numbers of carbon atoms in the aromatic hydrocarbons, the straight-chain alkanes, and the cycloalkanes each are C7-C14, and preferably C8-C12. In some embodiments, the aromatic hydrocarbons are aromatic oils. In the present disclosure, when the compatilizer is a mixture of a plurality of components, there is no special requirement on the ratio of respective components in the mixture. In some embodiments of the present disclosure, the modifier is prepared from 0.1-0.5 parts by weight, and preferably 0.2-0.3 parts by weight of the coupling agent. In some embodiments of the present disclosure, the coupling agent is silane coupling agent. In some embodiments, the silane coupling agent is selected from the group consisting of KH550 and KH560. In the present disclosure, the compatilizer and the coupling agent are beneficial to the full dispersion of graphene in asphalt, preventing agglomeration.

In some embodiments of the present disclosure, the modifier is prepared from 0.1-0.25 parts by weight, and preferably 0.15-0.2 parts by weight of the sulfur. In some embodiments of the present disclosure, the modifier is prepared from 0.35-0.65 parts by weight, and preferably 0.4-0.6 parts by weight of the accelerant. In some embodiments of the present disclosure, the accelerant is an accelerant for polyurethane adhesives, and preferably *N*-cyclohexyl-2-benzothiazolylsulfenamide. In the present disclosure, the sulfur functions as a vulcanizing agent of the rubber and improves elasticity thereof. The accelerant functions as an accelerator for crosslinking reaction between the sulfur and rubber molecules, achieving the effects of shortening the vulcanizing time and reducing the vulcanizing temperature.

In some embodiments of the present disclosure, the modifier is prepared by a process comprising the following steps:
mixing the graphene, the SBS block copolymer, the polyurethane, the rubber, the compatilizer, and the coupling agent to obtain a mixture, and subjecting the mixture to a first compounding and a first rubber discharging in sequence to obtain a first compound rubber; and
mixing the first compound rubber with the sulfur and the accelerant to obtain a mixed material, and subjecting the mixed material to a second compounding and a second rubber discharging in sequence to obtain the modifier.

In the present disclosure, the graphene, the styrene-butadiene-styrene block copolymer, the polyurethane, the rubber, the compatilizer, and the coupling agent are mixed to obtain a mixture, and the mixture is subjected to the first compounding and the first rubber discharging in sequence to obtain the first compound rubber.

In some embodiments of the present disclosure, the first compounding is conducted at a temperature of 60 °C to 90 °C for 5 min to 25 min, and preferably 70 °C to 80 °C for 10 min to 15 min. In some embodiments of the present disclosure, the first compounding is conducted under stirring. In some embodiments, the stirring is conducted at a rotational speed of 50 rpm to 90 rpm, and preferably 60 rpm to 80 rpm. In some embodiments of the present disclosure, the first compounding is conducted in a rubber internal mixer.

In some embodiments of the present disclosure, the first rubber discharging is conducted at a temperature of 95 °C to 165 °C, and preferably 100 °C to 150 °C.

After the first rubber discharging, the method of the present disclosure preferably further includes letting a compound obtained from the first rubber discharging stand for 24 h.

In the present disclosure, after the first compound is obtained, the first compound is mixed with the sulfur and the accelerant to obtain a mixed material, and the mixed material is subjected to a second compounding and a second rubber discharging in sequence to obtain the modifier.

In some embodiments of the present disclosure, the second compounding is conducted at a temperature of 50 °C to 80 °C, preferably 60 °C to 70°C. In some embodiments, the second compounding is conducted for 3 min to 10 min, and preferably 5 min to 8 min. In some embodiments of the present disclosure, the second rubber discharging is conducted at a temperature of 95 °C to 155 °C, and preferably 100 °C to 140 °C. In some embodiments of the present disclosure, the second compounding is conducted in a rubber internal mixer.

The present disclosure further provides a method for preparing the graphene modified asphalt as described above, including the following steps:
preheating and dispersing the modifier to obtain a preheated and dispersed modifier;
heating the asphalt, and mixing a resulting molten asphalt with the preheated and dispersed modifier to obtain a premix; and
subjecting the premix to shearing, and then thermal insulation development to obtain the graphene modified asphalt.

In the present disclosure, the modifier is preheated and dispersed to obtain a preheated and dispersed modifier.

In some embodiments of the present disclosure, the preheating and dispersing is conducted at a temperature of 95 °C to 125 °C, and preferably 100 °C to 110 °C. In some embodiments, the preheating and dispersing is conducted for 1 h to 2 h, and preferably 1 h to 1.5 h. In the present disclosure, the preheating and dispersing could dehydrate the modifier and make the modifier dry and disperse.

In the present disclosure, after the preheated and dispersed modifier is obtained, the asphalt is heated to obtain a molten asphalt, and the molten asphalt is mixed with the preheated and dispersed modifier to obtain a premix.

In some embodiments of the present disclosure, the asphalt is heated at a temperature of 160 °C to 200 °C, and preferably 160 °C to 175 °C. In some embodiments, the asphalt is heated for 2 h to 4 h, and preferably 2.5 h to 3 h. In some embodiments of the present disclosure, the mixing is performed by stirring. In some embodiments, the stirring is a stirring with a glass rod or a stirring in a low-speed stirrer. In some embodiments, the stirring is conducted at 300 rpm to 400 rpm, and preferably 350 rpm. In the present disclosure, there is no specific limitation on the stirring time, as long as materials can be mixed evenly.

In some embodiments of the present disclosure, the mixing is conducted by adding the preheated and dispersed modifier in portions to the molten asphalt, and continuously stirring to mix well.

After the premix is obtained, in the present disclosure, the premix is subjected to shearing, and then thermal insulation development to obtain the graphene modified asphalt.

In some embodiments of the present disclosure, the shearing is conducted at a speed of 5,000 r/min to 10,000 r/min, and preferably 6,000 r/min to 8,000 r/min. In some embodiments, the shearing is conducted for 40 min to 80 min, preferably 50 min to 60 min, and more preferably 55 min to 60 min. In some embodiments of the present disclosure, the shearing is conducted in a shear pump. In the present disclosure, there is special limitations on the specific implementation of the shearing, as long as the operation known to those skilled in the art is adopted.

In the present disclosure, the premix is sheared. The modifier is fully dispersed in the asphalt using strong shear force and collision, while refining particles of each component, thereby forming a stable miscible system.

In some embodiments of the present disclosure, the thermal insulation development is conducted at a temperature of 165 °C to 190 °C, and preferably 180 °C. In some embodiments, the thermal insulation development is conducted for 24 h to 48 h, and preferably for 36 h to 48 h. In some embodiments of the present disclosure, the thermal insulation development is conducted in a development tank.

In the present disclosure, in view of the thermal insulation development, after the modifier is fully dissolved with the asphalt at high temperature, a stable spatial cross-linked structure is formed to ensure the storage stability and fatigue resistance of the graphene modified asphalt.

The technical solutions of the present disclosure will be clearly and completely described below with reference to the embodiments of the present disclosure. Apparently, the described embodiments are merely a part of, rather than all of, the embodiments of the present disclosure. All other embodiments obtained by a person of ordinary skill in the art based on the embodiments of the present disclosure without creative efforts shall fall within the scope of the present disclosure.

### Example 1

### Preparation of a modifier:

4 parts by weight of graphene, 15 parts by weight of SBS block copolymer (having a weight-average molecular weight of 300,000), 12 parts by weight of polyurethane, 14 parts by weight of rubber, 1.5 parts by weight of aromatic oil, and 0.2 parts by weight of coupling agent KH550 were mixed in a rubber internal mixer. A resulting mixture was subjected to a first compounding under a TCU temperature of 80 °C for 20 min while stirring at 80 rpm. Then, a resulting system was subjected to a first rubber discharging at 150 °C to obtain a first compound rubber.

46.7 parts by weight of the first compound rubber, 0.2 parts by weight of sulfur and 0.4 parts by weight of *N*-cyclohexyl-2-benzothiazolylsulfenamide were mixed to obtain a mixture. The mixture was subjected to a first compounding under a TCU temperature of 70 °C for 5 min while stirring at 60 rpm. Then, a resulting system was subjected to a second rubber discharging at 110 °C to obtain the modifier.

### Preparation of the graphene modified asphalt:

2.2 parts by weight of a modifier with a particle size of 0.15 mm was preheated and dispersed at 105 °C for 1.5 h to obtain a preheated and dispersed modifier.

110 parts by weight of PG76-22 SBS modified asphalt was preheated at 165 °C for 3 h to fully melt asphalt. Then the preheated and dispersed modifier was added to a resulting fully molten asphalt in 3 batches, and stirred evenly with a glass rod to obtain a premix.

The premix was heated to 175 °C, and subjected to shearing in a shear pump at a shearing rate of 6,000 r/min for 60 min. Then, the sheared premix was placed in a finished product development tank and subjected to thermal insulation development at 170 °C for 36 h to obtain the graphene modified asphalt.

### Example 2

The preparation of the modifier is the same as that in Example 1.

### Preparation of the graphene modified asphalt:

4.4 parts by weight of a modifier with a particle size of 0.15 mm was preheated and dispersed at 105°C for 1.5 h to obtain a preheated and dispersed modifier.

110 parts by weight of PG76-22 SBS modified asphalt was preheated at 165 °C for 3 h to fully melt asphalt. Then, the preheated and dispersed modifier was added to a resulting fully molten asphalt in 3 batches, and stirred evenly in a low-speed stirrer at 300 r/min to obtain a premix.

The premix was heated to 175 °C, and subjected to shearing in a shear pump at a shearing rate of 6,500 r/min for 60 min. Then, the sheared premix was placed in a finished product development tank and subjected to thermal insulation development at 175 °C for 36 h to obtain the graphene modified asphalt.

### Example 3

The preparation of the modifier is the same as that in Example 1.

### Preparation of the graphene modified asphalt:

6.6 parts by weight of a modifier with a particle size of 0.15 mm was preheated and dispersed at 105 °C for 1.5 h to obtain a preheated and dispersed modifier.

110 parts by weight of PG76-22 SBS modified asphalt was preheated at 165 °C for 3 h to fully melt asphalt. Then the preheated and dispersed modifier was added to a resulting fully molten asphalt in 3 batches, and stirred evenly in a low-speed stirrer at 400 r/min to obtain a premix.

The premix was heated to 180 °C, and subjected to shearing in a shear pump at a shearing rate of 7,000 r/min for 60 min. Then, the sheared premix was placed in a finished product development tank and subjected to thermal insulation development at 180 °C for 36 h to obtain the graphene modified asphalt.

### Example 4

The preparation of the modifier is the same as that in Example 1.

### Preparation of the graphene modified asphalt:

8.8 parts by weight of a modifier with a particle size of 0.15 mm was preheated and dispersed at 105 °C for 1.5 h to obtain a preheated and dispersed modifier.

110 parts by weight of PG76-22 SBS modified asphalt was preheated at 165 °C for 3 h to fully melt asphalt. Then the preheated and dispersed modifier was added to a resulting fully molten asphalt in 3 batches, and stirred evenly with a glass rod to obtain a premix.

The premix was heated to 185 °C, and subjected to shearing in a shear pump at a shearing rate of 8,000 r/min for 60 min. Then, the sheared premix was placed in a finished product development tank and subjected to thermal insulation development at 180°C for 36 h to obtain the graphene modified asphalt.

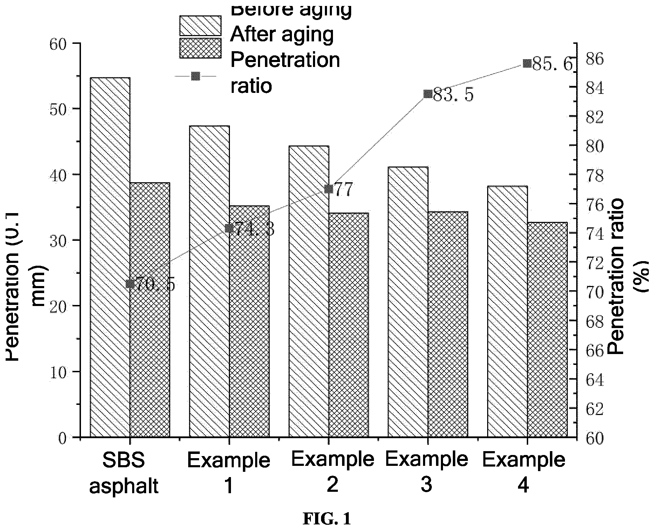

The basic performance, aging resistance, fatigue resistance and hydrophobicity were tested on the graphene modified asphalts obtained from Examples 1 to 4. The results are shown in Tables 1 to 4 and FIGs. 1 to 6.

**Table 1 Performance test results of the graphene modified asphalts in Examples 1 to 4 and PG76-22 SBS modified asphalt**

| Test | Unit | SBS asphalt | Example 1 | Example 2 | Example 3 | Example 4 |
|---|---|---|---|---|---|---|
| Penetration (25 °C) | 0.1 mm | 55 | 48 | 44 | 41 | 38 |
| Softening point | °C | 80.6 | 86.3 | 90.5 | 94.2 | 96.9 |
| Ductility at 5 °C | cm | 32.4 | 41.2 | 42.4 | 45.6 | 44.5 |
| Dynamic viscosity at 60 °C | Pa.s | 15087 | 227810 | 943225 | 1792991 | 2867480 |
| *G**/sin *δ* ≥ 2.2*kPa* critical temperature | °C | 76.8 | 82.6 | 85.9 | 94.1 | 98.5 |

The viscosity of high-viscosity asphalt is an index to feed back the shear deformation resistance of asphalt. Increasing the asphalt viscosity could effectively improve the adhesion of asphalt and aggregate. The increase in viscosity would substantially enhance the ability of asphalt mixture to resist water damage and load damage, which is of great significance for the selection of asphalt materials for drainage pavements. It can be seen from Table 1 that after adding the modifier, there are significant improvements in penetration, softening point, ductility, viscosity at 60 °C and critical temperature of the asphalt. In particular, the dynamic viscosity at 60 °C of Example 4 is 190 times higher than that of the original SBS asphalt, reaching 2,867,480 Pa·s, far exceeding the requirement of China's regulations for high-viscosity asphalt viscosity not less than 20,000 Pa·s. The PG grading is also increased from PG76 to PG94, indicating that the graphene modified asphalt according to the present disclosure is a high-viscosity asphalt with excellent performances and can be used as an asphalt material for drainage pavements.

**Table 2 Test results of aging resistance of graphene modified asphalts in Examples 1 to 4 and PG76-22 SBS modified asphalt**

| Test (After short-term aging) | Unit | SBS asphalt | Example 1 | Example 2 | Example 3 | Example 4 |
|---|---|---|---|---|---|---|
| Weight change | % | 0.35 | 0.28 | 0.24 | 0.22 | 0.15 |
| Residual penetration ratio | % | 70.5 | 74.3 | 77.0 | 83.5 | 85.6 |
| Ductility at 5°C | cm | 16.1 | 20.5 | 23.0 | 29.5 | 32.0 |
| Residual ductility ratio | % | 47.9 | 49.6 | 54.2 | 64.7 | 71.9 |

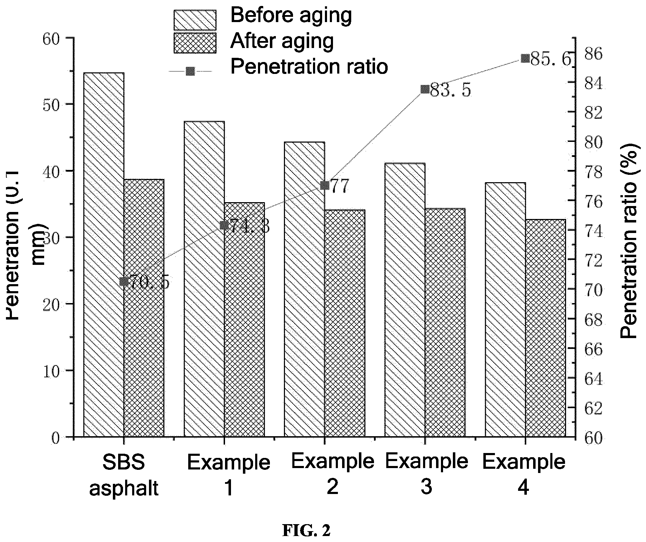

FIG. 1 illustrates penetrations of the graphene modified asphalt and the SBS asphalt before and after aging. FIG. 2 illustrates the ductility of the graphene modified asphalt and the SBS asphalt before and after aging. It can be seen from Table 2 and FIGS. 1 and 2 that after the addition of the modifier, the weight change of asphalt decreases, and the residual penetration ratio and residual ductility ratio increase, indicating that the addition of the modifier improves the aging resistance of the asphalt. Because graphene has a lamellar structure, and when it is mixed into the molecular structure of asphalt, it prolongs the path of free oxygen entering the asphalt and light components evaporating to the outside, thus delaying the aging and deterioration of the asphalt. In particular, the indexes of Example 4 after aging far exceed the specified requirements, indicating that the graphene modified asphalt according to the present disclosure has excellent aging resistance.

**Table 3 Test results of fatigue resistance of the graphene modified asphalts in Examples 1 to 4 and the PG76-22 SBS modified asphalt**

| LAS test | Unit | SBS asphalt | Example 1 | Example 2 | Example 3 | Example 4 |
|---|---|---|---|---|---|---|
| Yield strain | % | 12.1274 | 13.3165 | 16.2338 | 17.6202 | 29.6886 |
| Fatigue life (2.5% strain) | Time | 42768 | 78988 | 149386 | 414709 | 4136058 |
| Fatigue life (5% strain) | Time | 5823 | 9632 | 15729 | 32046 | 244793 |

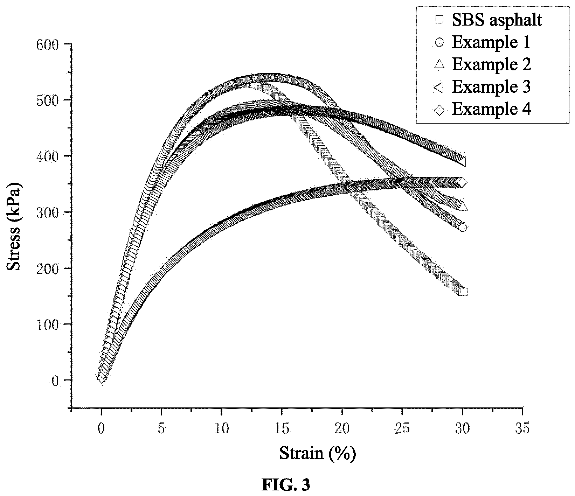

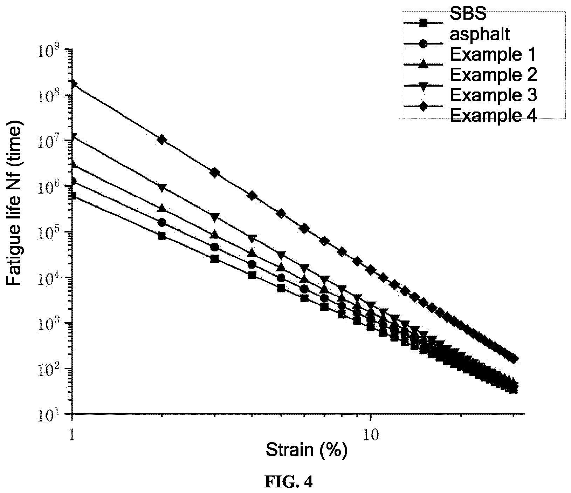

FIG. 3 illustrates the stress-strain of the graphene modified asphalt and the SBS asphalt before and after aging. FIG. 4 illustrates the strain-fatigue life of the graphene modified asphalt and the SBS asphalt before and after aging. It can be seen from Table 3 and FIGS. 3 and 4 that the yield strain and fatigue life of the asphalt are substantially improved after adding the modifier, indicating that the modifier substantially improves the fatigue resistance of the graphene modified asphalt. The yield strain of 8% graphene reaches 29.6886%, the fatigue life at 2.5% strain level is 4,136,058 times, and the fatigue life at 5% strain level is 244,793 times, indicating that the graphene modified asphalt according to the present disclosure has excellent fatigue resistance.

**Table 4 Test results of hydrophobicity of the graphene modified asphalts in Examples 1 to 4 and the PG76-22 SBS modified asphalt**

| | | | | | |
|---|---|---|---|---|---|
| Contact angle test | SBS asphalt | Example 1 | Example 2 | Example 3 | Example 4 |
| | 95.4° | 103.7° | 112.6° | 118.3° | 122.5° |

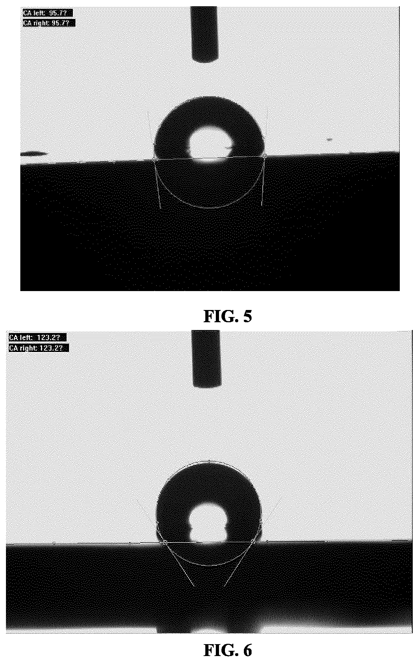

FIG. 5 illustrates a contact angle of SBS asphalt. FIG. 6 illustrates a contact angle of graphene modified asphalt in Example 4.

It can be seen from Table 4 and FIGS. 5 and 6 that the contact angle gradually increases after the addition of the modifier, indicating that the modifier can improve the hydrophobicity of the asphalt; the contact angle of Example 4 reaches 122.5°, indicating that the graphene modified asphalt according to the present disclosure has strong hydrophobicity.

The above are merely preferred embodiments of the present disclosure. It should be noted that several improvements and modifications might further be made by a person of ordinary skill in the art without departing from the principle of the present disclosure, and such improvements and modifications should also be deemed as falling within the scope of the present disclosure.

## Claims

1. A graphene modified asphalt, comprising the following raw materials in parts by weight:
100-140 parts of an asphalt; and
1-20 parts of a modifier;
wherein the modifier is modified graphene, and the modifier is prepared from raw materials comprising: graphene, a styrene-butadiene-styrene (SBS) block copolymer, polyurethane, rubber, a compatilizer, a coupling agent, sulfur and an accelerant.

2. The graphene modified asphalt according to claim 1, wherein the modifier is prepared from the raw materials comprising, in parts by weight:
1-5 parts of the graphene;
5-20 parts of the SBS block copolymer;
5-20 parts of the polyurethane;
5-20 parts of the rubber;
0.5-3 parts of the compatilizer;
0.1-0.5 parts of the coupling agent;
0.1-0.25 parts of the sulfur; and
0.35-0.65 parts of the accelerant.

3. The graphene modified asphalt according to claim 1 or 2, wherein the modifier has a particle size of 0.075 mm to 2.36 mm.

4. The graphene modified asphalt according to claim 1 or 2, wherein the SBS block copolymer has a weight-average molecular weight greater than 200,000.

5. The graphene modified asphalt according to claim 1 or 2, wherein the polyurethane has a weight-average molecular weight greater than 10,000.

6. The graphene modified asphalt according to claim 1 or 2, wherein the rubber has a particle size of 20 mesh to 100 mesh.

7. The graphene modified asphalt according to claim 1 or 2, wherein the compatilizer comprises one or more selected from the group consisting of aromatic hydrocarbons, straight-chain alkanes, and cycloalkanes.

8. The graphene modified asphalt according to claim 1 or 2, wherein the modifier is prepared by a process comprising the following steps:
mixing the graphene, the SBS block copolymer, the polyurethane, the rubber, the compatilizer, and the coupling agent to obtain a mixture, and subjecting the mixture to a first compounding and a first rubber discharging in sequence to obtain a first compound rubber; and
mixing the first compound rubber with the sulfur and the accelerant to obtain a mixed material, and subjecting the mixed material to a second compounding and a second rubber discharging in sequence to obtain the modifier;
wherein the first compounding is conducted at a temperature of 60 °C to 90 °C for 5 min to 25 min; and
the second compounding is conducted at a temperature of 50 °C to 80 °C for 3 min to 10 min.

9. The graphene modified asphalt according to claim 1, wherein the asphalt is SBS modified asphalt.

10. A method for preparing the graphene modified asphalt according to any one of claims 1 to 9, comprising the following steps:
preheating and dispersing the modifier to obtain a preheated and dispersed modifier;
heating the asphalt, and mixing a resulting molten asphalt with the preheated and dispersed modifier to obtain a premix; and
subjecting the premix to shearing, and then thermal insulation development to obtain the graphene modified asphalt.

11. The method according to claim 10, wherein the preheating and dispersing is conducted at a temperature of 95 °C to 125 °C for 1 h to 2 h.

12. The method according to claim 10, wherein the mixing is conducted at a temperature of 160 °C to 200 °C.

13. The method according to claim 10, wherein the shearing is conducted at a speed of 5,000 r/min to 10,000 r/min, and the shearing is conducted at a temperature of 170 °C to 200 °C for 40 min to 80 min.

14. The method according to claim 10, wherein the thermal insulation development is conducted at a temperature of 165 °C to 190 °C for 24 h to 48 h.
